# EUROPEAN PATENT APPLICATION

(11) **EP 4 811 195 A1**
(43) Date of publication of application: **23.09.2026**
(21) Application number: 25165221.0
(22) Date of filing: 21.03.2025
(51) Int. Cl.: G06F 21/57, H04L 9/40, G06F 21/51, G06F 21/52

(54) **AN ARRANGEMENT AND A METHOD OF THREAT DETECTION AND PREVENTION IN A COMPUTER OR COMPUTER NETWORK**

(71) Applicant: WithSecure Corporation, 00180 Helsinki (FI)
(72) Inventor: KOMASHINSKIY, Dmitriy, 00180 Helsinki (FI); NIEMELÄ, Jarno, 00180 Helsinki (FI); TURBIN, Pavel, 00180 Helsinki (FI); RANTA-AHO, Perttu, 00180 Helsinki (FI)
(74) Representative: Berggren Oy

(57) **Abstract**

An arrangement (410) and a method, e.g. a computer implemented method, of threat detection and/or prevention in a computer (101) or computer network (201), wherein the method comprises collecting vulnerability information from a computer (101) or computer network (201) for detecting vulnerable components, such as a vulnerable library, a vulnerable feature, a vulnerable package, a vulnerable container, vulnerable plugin and/or a vulnerable extension, at the computer (101), collecting information relating to executables, processes and/or applications which are running on the computer (101), and checking if the process, application or executable which have been identified running in the computer (101) are using any of the detected vulnerable components, and monitoring the running executables, processes and/or applications for a predefined period of time, and determining the risk level of an executable, process, application and/or the computer (101) based on the information collected during monitoring, wherein the risk of level of the executable, process, application and/or the computer (101) is elevated if the vulnerable component is used, e.g. systematically used, during monitoring.

## Description

### Technical Field

The present invention relates to an arrangement and a method of threat prevention and/or threat detection in a computer or computer network.

### Background

Security systems for computers and computer networks are used to detect threats and anomalies in computers and networks. Examples of such are Endpoint Detection & Response (EDR) and Managed Detection and Response (MDR) products and services. EDR focuses on the detection and monitoring of a breach as it occurs and helps to determine how best to respond to the detected breach. The growth of efficient and robust EDR solutions has been made possible in part by the emergence of machine learning, big data and cloud computing. MDR in turn is a managed cybersecurity service providing service for threat detection, response and remediation.

Modern EDR and MDR services can rely on endpoint-side software agents or sensors that collect, preprocess and submit relevant state and behavioural data to the backend side whose data processing pipelines focus on advanced enrichment and analysis of the data for further timely attack detection and response. Increasing complexity and sophistication of advanced cyberattacks requires continuous development and maintenance of mechanisms from EDR and MDR service providers to be able to provide early detection of new and modified attack patterns.

Security systems can also monitor vulnerabilities in computers, networks and software applications. These kind of security solutions can be called vulnerability management solutions. The goal of vulnerability management is to reduce the risk of security breaches and data compromises by proactively addressing weaknesses before they can be exploited by attackers. Vulnerability management solutions may continuously scan systems and networks for potential vulnerabilities. Vulnerabilities can arise e.g. from software bugs, misconfigurations, or outdated software versions. Once vulnerabilities are identified, they need to be assessed to determine their severity and potential impact on the organization's security posture. This assessment helps to prioritize which vulnerabilities should be addressed first. Vulnerability management solutions can prioritize vulnerabilities e.g. based on their severity, exploitability, and potential impact. Once vulnerabilities are identified and prioritized, organizations can take steps to mitigate or remediate them. This may involve applying software patches, reconfiguring systems, or implementing additional security controls to reduce the risk of exploitation.

Risk management and evaluation can be taken further with Exposure Management systems which not only take care of analysing vulnerabilities but also other factors that contribute to the organization's risk exposure, such as threat landscape, business impact and effectiveness of security controls.

A problem with vulnerability management is that on any sizeable organization it is impossible to patch all vulnerabilities, especially in time before attackers leverage some of them. Significant portion of vulnerabilities discovered on computers are in code libraries that are included into some application. A vulnerability scan will detect for example these kind of vulnerabilities in a computer (in addition to other vulnerabilities) but the vulnerability scan does not reveal if the findings are significant or not and, e.g. if the vulnerabilities are usable or not, for example with that specific computer. For these reasons the prior art vulnerability scanning solutions or exposure management solutions are not able to reliably determine a risk level of a computer based on the vulnerability scan.

For these reasons there is a need for a reliable and efficient threat detection and/or prevention method, threat detection network and threat detection service which is also able to reliably determine the real risk level of different components of the threat detection network.

### Summary

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

According to a first aspect, the invention relates to a method, e.g. a computer implemented method, of threat detection and/or prevention in a computer or computer network, wherein the method comprises collecting vulnerability information from a computer or computer network for detecting vulnerable components, such as a vulnerable library, a vulnerable feature, a vulnerable package, a vulnerable container, a vulnerable plugin and/or a vulnerable extension, at the computer, collecting information relating to executables, processes and/or applications which are running on the computer, and checking if the process, application or executable which have been identified running in the computer are using any of the detected vulnerable components, and monitoring the running executables, processes and/or applications for a predefined period of time, and determining the risk level of an executable, process, application and/or the computer based on the information collected during monitoring, wherein the risk of level of the executable, process, application and/or the computer is elevated if the vulnerable component is used, e.g. systematically used, during monitoring.

In one embodiment of the invention the risk level of the executable, process, application and/or the computer is elevated if the determined vulnerable component is known to be exploitable, e.g. a PoC of the exploit is known to exist, or the determined vulnerable component is known to be exploited, and/or a patch for the vulnerability of the vulnerable component is not installed.

In one embodiment of the invention the risk of level of the executable, process, application, and/or the computer is elevated if the determined vulnerable component is used a predefined number of times during a predefined period of time.

In one embodiment of the invention at least one of the following information is collected for detecting a vulnerable component and/or relating to the detected vulnerable component: a process, executable, application, and/or version running the vulnerable code, e.g. CPE entry; a specific module, such as a library, a package, a plugin, an extension containing the vulnerable code; an API and possible parameters which could be used and executed if vulnerable code is running; files, applications, modules and/or processes opened or executed if vulnerable code is running; network protocols required to exploit vulnerability; actual execution area of vulnerable code within process e.g. relative offset of code section where vulnerable code resides.

In one embodiment of the invention at least one of the following information is collected relating to the executables, processes and/or applications at the computer relating to a vulnerable component: is a vulnerable executable, process and/or application running on the computer; is a vulnerable component and/or module loaded by a executable, process and/or application; usage of vulnerable module and/or code by an API; usage of vulnerable module and/or code by a running environment of the process, application and/or executable; files, modules and processes using vulnerable module and/or code.

In one embodiment of the invention the method further comprises analysing the executable, process and/or application in relation to the detected vulnerability by determining whether a vulnerable component used with the said executable, the said process and/or the said application is usable for attacking the computer.

In one embodiment of the invention the method comprises using binary tracing and/or API call monitoring for determining which components, e.g. vulnerable components, are in use.

In one embodiment of the invention the method further comprises analysing a running environment of the process, application and/or executable for determining whether the vulnerable component is used by the running environment of the process, application or executable. In one embodiment of the invention the method comprises checking environment variables relating to a process, application and/or executable for determining whether a vulnerable component, such as a vulnerable library, is in use by the process, application or executable.

In one embodiment of the invention the applications comprise interpreted applications and/or just-in-time compiled applications, such as Java-applications, Python-applications, non-executable applications, and/or the vulnerability is in the non-executable package.

In one embodiment of the invention the method further comprises monitoring the network traffic to the computer, e.g. by filtering and/or analysing network data received by an executable, process and/or application.

In one embodiment of the invention the method further comprises checking the monitored the network traffic for verifying active configuration of the executable, the process and/or the application, and/or checking the filtered and analysed network data against known vulnerable code for detecting vulnerable components.

In one embodiment of the invention the information related to vulnerabilities and/or vulnerable components is collected at least in part from at least one data collector at the computer and/or computer network, and/or received from a backend system of a threat detection network and/or an external data source, such as threat intelligence data source. In one embodiment of the invention the computer sends at least a part of the collected data to a backend system, e.g. an XDR-backend system, for analysis and/or receives information related to the analysis from the backend.

In one embodiment of the invention the method further comprises generating an attack path map of the computer network based at least in part on the determined risk level of a computer, determined risk level of an executable of the computer, determined risk level of a process of the computer and/or determined risk level of an application of the computer.

According to a second aspect, the invention relates to an arrangement, such as a computer and/or a backend server, wherein the arrangement is configured to collect vulnerability information from a computer or computer network for detecting vulnerable components, such as a vulnerable library, a vulnerable feature, a vulnerable package, a vulnerable plugin and/or a vulnerable extension, at the computer, to collect information relating to executables, processes and/or applications which are running on the computer, and to check if the process, application or executable which have been identified running in the computer are using any of the detected vulnerable components, and to monitor the running executables, processes and/or applications for a predefined period of time, and to determine the risk level of an executable, process, application and/or the computer based on the information collected during monitoring, wherein the risk of level of the executable, process, application and/or the computer is elevated if the vulnerable component is used, e.g. systematically used, during monitoring.

In one embodiment of the invention the arrangement is configured to carry out a method according to any embodiment of the invention.

According to a third aspect, the invention relates to a computer program comprising instructions which, when executed by a computer, cause the computer to carry out a method according to the invention.

According to a fourth aspect, the invention relates to a computer-readable medium comprising the computer program according to the invention.

With the solution of the invention, a reliable and efficient threat detection and/or prevention method, threat detection network and/or threat detection service is provided which is also able to reliably and automatically determine the real risk level of different components of the threat detection network. The solution of the invention is able for example to take into account whether vulnerability findings are significant or not, and e.g. whether a vulnerability is in active use or not and/or could be used by an attacker for example in a specific computer.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated.

Furthermore, it is to be understood that the use of "a" or "an", i.e. a singular form, throughout this document does not exclude a plurality.

### Brief description of the drawings

The embodiments of the invention are illustrated by way of example, and not by way of limitation, in the figures of the accompanying drawings.
- Figure 1: presents as a schematic diagram a computer system or computer network configuration, for which exemplifying embodiments of the present invention are applicable.
- Figure 2: presents schematically an example network architecture of one embodiment of the invention.
- Figure 3: presents an example method according to one embodiment of the invention.
- Figure 4: presents as a schematic diagram an example structure of an arrangement according to an embodiment of the present invention.

### Detailed description

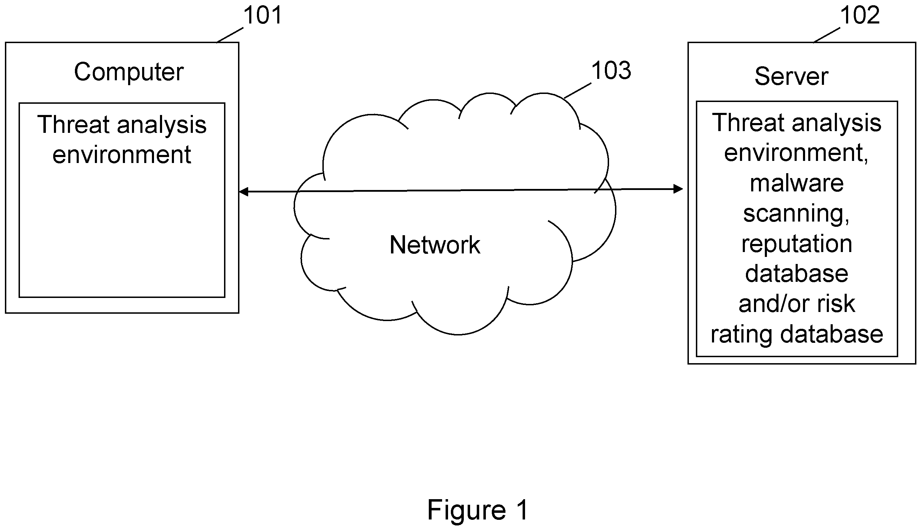

Figure 1 presents an environment in which the solution of the invention can be used. In the solution of Figure 1 a system configuration is presented in which a local computer 101 and a remote entity or server 102 are connected via a network 103. Here, the computer 101 can exemplify any host, computer or communication system, including a single device, a network node or a combination of devices, on which threat detection and/or prevention is to be performed. The threat prevention and/or detection can be done at the computer and/or at the server, e.g. in a threat analysis environment. For example, the computer 101 may include a host, a personal computer, a personal communication device, a network-enabled device, a client, a firewall, a mail server, a proxy server, a database server, or the like. The server 102 exemplifies any computer or communication system, including a single device, a network node or a combination of devices, on which threat prevention and/or detection can be performed for the computer 101, or which can provide data for the computer 101 required to carry out the threat prevention and/or detection at the computer, such as vulnerability info, risk rating and/or reputation data. For example, the server 102 may include a security entity or a backend entity of a security provider, or the like, and the server 102 may be realized in a cloud implementation or the like.

According to exemplifying embodiments of the invention, threat detection, threat prevention and/or malware detection at the computer 101 and/or by the server 102 can be realized using a threat analysis environment, such as a virtual machine or emulator environment, which can be arranged at the computer and/or at the server. For example, an agent or a sensor, such as e.g. an EDR/MDR-software agent and/or anti-virus software can be installed/arranged at the computer 101 to be used for threat detection, threat prevention, vulnerability and/or malware scanning. In one embodiment of the invention a sensor or agent at the computer is used to allow to intercept a file, a system configuration value and/or network operations called by the application. The sensor can be used to observe operation of the device, such as a computer, and information collected by the sensor can be used to detect malicious behaviour of an application, a file and/or a process and/or a vulnerability related to an application.

The network 103 exemplifies any computer or communication network, including e.g. a (wired or wireless) local area network like LAN, WLAN, Ethernet, or the like, a (wired or wireless) wide area network like WiMAX, GSM, UMTS, LTE, or the like, and so on. Hence, the computer 101 and the server 102 can but do not need to be located at different locations. For example, the network 103 may be any kind of TCP/IP-based network. Communication between the computer 101 and the server 102 over the network 103 can be realized using for example any standard or proprietary protocol carried over TCP/IP, and in such protocol the malware scanning agent at the computer 101 and the malware analysis sandbox or application at the server 102 can be represented on/as the application layer.

A threat detection network according to one embodiment of the invention may comprise at least a computer, e.g. a node, such as a network node, and/or and at least one backend server. In this case information, e.g. threat detection models and/or model of normal behaviour of an application and other required information, can be shared between the computers and/or between the computers and the backend server. In one embodiment of the invention the threat detection network can comprise only a plurality of computers, e.g. nodes, and no backend server is necessary. In this case information, e.g. threat detection models and other required information, can be shared between the computers.

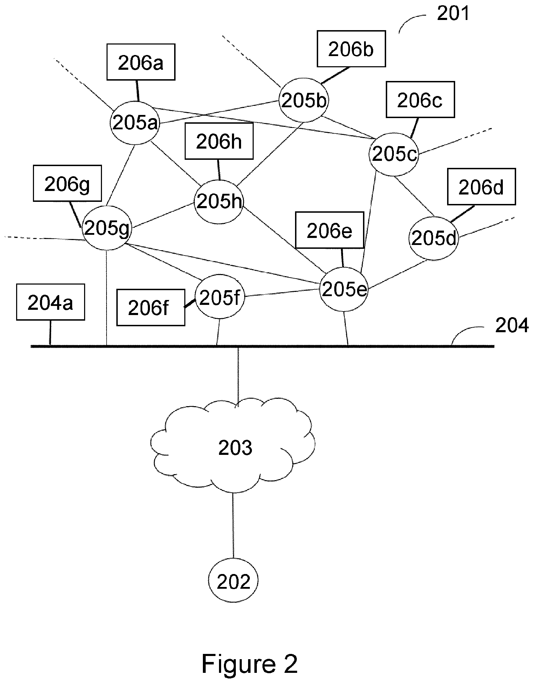

Figure 2 presents schematically an example network architecture of one embodiment of the invention in which the solution of the invention can be used. In Figure 2 a part of a first computer network 201 is schematically illustrated into which a computer system, for example an EDR or MDR system, has been installed. Also, any other computer system that is able to implement the embodiments of the invention can be used instead or in addition to the EDR or MDR system used in this example. The first computer network can be connected to a security service network, here a security backend/server 202 through the cloud 203. The backend/server 2 can form a node on the security service computer network relative to the first computer network. The security service computer network can be managed by an EDR or MDR system provider and may be separated from the cloud 203 by a gateway or other interface (not shown) or other network elements appropriate for the backend 202. The first computer network 1 may also be separated from the cloud 203 by a gateway 204 or other interface. Other network structures are also possible.

The first computer network 201 can be formed of a plurality of interconnected computers 205a-205h, each representing an element in the computer network 201 such as a computer, smartphone, tablet, laptop, node or other piece of network enabled hardware. Each computer 205a-205h shown in the computer network also represents an EDR or MDR endpoint onto which a security agent module 206a-206h, that may include a data collector or a sensor, is installed. Security agent modules may also be installed on any other element of the computer network, such as on the gateway or other interface. In the example of Figure 1 a security agent module 204a has been installed on the gateway 204. The security agent modules, 206a-206h, 204a collect various types of data at the computers 205a-205h or gateway 204 including, for example, program or file hashes, files stored at the computers 205a-205h, logs of network traffic, process logs, binaries or files carved from memory (e.g. DLL, EXE, or memory forensics artefacts), and/or logs from monitoring actions executed by programs or scripts running on the computers 205a-205h or gateway 204 (e.g. TCP dumps).

The data collected e.g. by the sensors and/or the server, may be stored in a database or similar model for information storage for further use. Any kind of threat models may further be constructed at the computers 205a-205h by a security application, at the backend/server 202, and/or at a second server and be stored in the database. The computers 205a-205h and the server 202 typically comprise a hard drive, a processor, and RAM.

Any type of data which can assist in detecting and monitoring a security threat, such as a security breach or intrusion into the system, may be collected by the security agent modules 206a-206h, 204a during their lifecycle and that the types of data which are observed and collected may be set according to rules defined by the EDR system provider upon installation of the EDR system and/or when distributing components of a threat detection model or other information related to threat detection. In an embodiment of the present invention, at least part of the security agent modules 206a-206h may also have capabilities to make decisions on the types of data observed and collected themselves. For example, the security agents 206a-206h, 204a may collect data about the behaviour of applications and/or programs running on an EDR or MDR endpoint and can observe when new programs and/or applications are started. Where suitable resources are available, the collected data may be stored permanently or temporarily by the security agent modules 206a-206h, 204a at their respective computers or at a suitable storage location on the first computer network 1 (not shown).

The security agent modules 206a-206h, 204a can be set up such that they send information such as the data they have collected or send and receive instructions to/from the EDR or MDR backend 202 through the cloud 203. This allows the EDR or MDR system provider to remotely manage the EDR or MDR system without having to maintain a constant human presence at the organization which administers the first computer network 201.

In one embodiment of the invention, the security agent modules 206a-206h, 204a can also be configured to establish an internal network, e.g. an internal swarm intelligence network, that comprises the security agent modules of the plurality of interconnected computers 205a-205h of the local computer network 201. As the security agent modules 206a-206h, 204a collect data related to the respective computers 205a-205h of each security agent module 206a-206h, 204a, they are further configured to share information that is based on the collected data in the established internal network. In one embodiment a swarm intelligence network is comprised of multiple semi-independent security computers (security agent modules) which are capable of functioning on their own as well. Thus, the numbers of instances in a swarm intelligence network may well vary. There may also be more than one connected swarm intelligence networks in one local computer network, which collaborate with one another.

The security agent modules 206a-206h, 204a can be further configured to use the collected data and information received from the internal network for generating and adapting models related to the respective computer 205a-205h and/or its users. Models can be for example user behaviour models, threat detection models, models of normal behaviour of an application, etc.

In one embodiment of the invention the malware analysis environment, service and/or software can detect starting and closing of applications, all processes related to applications and processes. Also, when the services are started early, the service can be able to detect and follow most of user's applications. In one embodiment of the invention, when the malware detection software or service is started up, it can perform running application inventory.

Threat detection or threat prevention systems can also monitor vulnerabilities in computers and networks. These kind of security solutions can be called vulnerability management solutions. The goal of vulnerability management is to reduce the risk of security breaches and data compromises by proactively addressing weaknesses before they can be exploited by attackers. Vulnerability management solutions may, e.g. continuously, scan computers, systems and networks for potential vulnerabilities. Vulnerabilities can arise e.g. from software bugs, misconfigurations, or outdated software versions. Once vulnerabilities are identified, they need to be assessed to determine their severity and potential impact on the organization's security posture. As stated earlier, it's hard or practically impossible to patch all vulnerabilities at once and immediately after they have been identified. Also, some vulnerable components may be found which can't be used in practice by an attacker for example with the current computer, current user, current organization, etc. Therefore, it is important to know when a vulnerability is found, how severe it is and/or can it be used by an attacker. In order to determine whether a vulnerability can be used at a computer, enough information needs to be collected that allows to determine, whether a component, such as a library, which has the vulnerability is used by any program that is in active use, and whether the program is such that it can be abused by attacker. For this purpose, the solution of the invention can collect information from many sources for identifying whether a given vulnerability is likely to be in that kind of use that the attacker could abuse it. The information can be collected e.g. at least from one of the following sources or ways: vulnerability file scan, automatic code linkage and dependency reverse engineering, EDR or other behavioural information feed, and application knowledge repository.

In the solution of the invention vulnerability information is collected from a computer or computer network for detecting vulnerable components at the computer. Vulnerable component can be for example a vulnerable library, a vulnerable feature, a vulnerable package, a vulnerable container, vulnerable plugin and/or a vulnerable extension. Also information relating to executables, processes and/or applications which are running on the computer is collected, and it is checked if the process, application or executable which have been identified running in the computer are using any of the detected vulnerable components. For example, binary tracing and/or API call monitoring can be used for determining which components, e.g. vulnerable components, are in use.

The applications can comprise interpreted applications and/or just-in-time compiled applications, such as Java-applications, Python-applications, Perl-applications, Ruby-applications, non-executable applications, and/or the vulnerability is in the non-executable package. In this case the vulnerability can be for example in a JAR file, Python egg or a (another component) which is not native OS executable or library.

The running executables, processes and/or applications are monitored for a predefined period of time and the executable, process and/or application can be analysed in relation to the detected vulnerability by determining for example whether a vulnerable component used with the said executable, the said process and/or the said application is usable for attacking the computer. In one embodiment of the invention a running environment of the process, application or executable can be analysed for determining whether the vulnerable component is used by the running environment of the process, application and/or executable, and/or environment variables can be checked relating to a process, application and/or executable for determining whether a vulnerable component, such as a vulnerable library, is in use by the process, application or executable. In one embodiment the running environment of Java, Python or other process can be analysed that is doing the actual execution of application, and it can be checked for example whether the vulnerable library is a part of Java class path, Python virtual environment or other running configuration, and if it is, it can in one embodiment be treated in a corresponding way as if it would be a vulnerable native library loaded by native application.

In one embodiment of the invention the network traffic to the computer can be monitored, e.g. by filtering and/or analysing network data received by an executable, process and/or application. The monitored network traffic can be checked for verifying active configuration of the executable, the process and/or the application, and/or the filtered and analysed network data can be checked against known vulnerable code for detecting vulnerable components. In one embodiment of the invention local fuzzing can be carried towards the application to verify its active configuration.

Based on the information collected during monitoring, a risk level of an executable, process, application and/or the computer is determined. The risk of level of the executable, process, application and/or the computer is elevated if the vulnerable component is used, e.g. systematically used, during monitoring. In one embodiment of the risk level of the executable, process, application and/or the computer can be elevated if the determined vulnerable component is known to be exploitable, e.g. a PoC of the exploit is known to exist, or the determined vulnerable component is known to be exploited, and/or a patch for the vulnerability of the vulnerable component is not installed. In one embodiment of the invention the risk of level of the executable, process, application, and/or the computer can be elevated if the determined vulnerable component is used a predefined number of times during a predefined period of time.

The risk level determined with the solution of the invention can be utilized with in an exposure management system or service. Exposure Management systems are solutions which not only take care of analysing vulnerabilities but also other factors that contribute to the organization's risk exposure, such as threat landscape, business impact and effectiveness of security controls.

One method which can be used by an exposure management system is attack path mapping. Attack path mapping focuses on understanding potential attack pathways and security weaknesses by leveraging the knowledge of the TTPs (tactics, techniques and procedures) that attackers could use to compromise an organization's systems and data. Attack path mapping can involve identifying and analysing the various entry points, vulnerabilities, and attack vectors that attackers could exploit to achieve their objectives. The goal of attack path mapping is to gain insights into the organization's attack surface and identify potential weaknesses and security gaps that could be exploited by attackers.

Attack path mapping is usually understood as a static layout or model of the environment of an organization, and it can be further expanded and improved by attack path simulation which models how an attacker could move through the environment of an organization. Attack path simulation can use for example automated tools to simulate various attack scenarios and take into account current configurations, vulnerabilities, and defences. Attack path simulation can provide a more proactive and continuous assessment of security posture than attack path mapping alone by e.g. allowing to see how different attack vectors could be exploited. Based on attack path simulation an up-to-date attack path map of the organization can be formed.

In one embodiment of the invention an attack path map of the computer network can be generated based at least in part on the determined risk level of a computer, determined risk level of an executable of the computer, determined risk level of a process of the computer and/or determined risk level of an application of the computer. In one embodiment the determined risk level can be used for assessing exposure level of composite entities like computer networks segments, business units' and organizations' IT units and OT (operational technology) units. In one embodiment of the invention the end-result can be a vulnerability report and/or an attack path simulation, which do not contain false alarms caused by components, such as library files, that just happen to be on the computer as a left over and are nor actually in any kind of use.

At least one of the following information can be collected for detecting a vulnerable component and/or relating to the detected vulnerable component: a process, executable, application and/or version running the vulnerable code, e.g. CPE entry; a specific module, such as a library, a package, a plugin, an extension containing the vulnerable code; an API and possible parameters which could be used and executed if vulnerable code is running; files, applications, modules and/or processes opened or executed if vulnerable code is running; network protocols required to exploit vulnerability; actual execution area of vulnerable code within process e.g. relative offset of code section where vulnerable code resides.

At least one of the following information can be collected relating to the executables, processes and/or applications at the computer relating to a vulnerable component: is a vulnerable executable, process and/or application running on the computer; is a vulnerable component and/or module loaded by a executable, process and/or application; usage of vulnerable module and/or code by an API; usage of vulnerable module and/or code by a running environment of the process, application and/or executable; files, modules and processes using vulnerable module and/or code.

The information related to vulnerabilities and/or vulnerable components can be collected at least in part from at least one data collector at the computer and/or computer network, and/or received from a backend system of a threat detection network and/or an external data source, such as threat intelligence data source.

In one embodiment of the invention the computer can send at least a part of the collected data to a backend system, e.g. an XDR-backend system, for analysis and/or receives information related to the analysis from the backend.

In the following an example scenario is presented according to an example embodiment of the invention. In this example scenario a computer, e.g. a host, has installed software such as a web server. At some point a vulnerability is discovered with the installed web server and a respective CVE is published. While CVE can have its criticality rating, for this specific computer its risk factor can also be affected by usage of the vulnerable component. With the solution of the invention the actual security risk level for given computer and running specific vulnerability can be determined and/or estimated until a patch is installed.

For discovered vulnerabilities required information is collected so that the vulnerability and the application, executable or process can be identified to which the vulnerability relates. E.g. the following information can be collected for discovered vulnerability (in the above example and also in more general solution of the invention):
- Process and version running the vulnerable code (e.g. CPE entry)
- Specific module (library, plugin, extension), if applicable, containing the vulnerable code
- System API and possible parameters which could be used and executed if vulnerable code is running
- Files, modules and processes possibly opened or executed if vulnerable code is running
- Network protocols required to exploit vulnerability
- Actual execution area of vulnerable code within process e.g. relative offset of code section where vulnerable code resides

At least some collected properties can be sent to the affected computer and monitoring agent can be started. The agent can for example follow the application, executable or process and carry out at least one of the following (in the above example and also in other embodiments of the invention):
- check if vulnerable application, executable or process is running on the computer
- check if a vulnerable component or module is specified, check if it was loaded by an application, an executable or a process
- trace system APIs and match them to known for the vulnerable code
- check files, modules and applications, executables and/or processes and matches them to known for the vulnerable code
- filter and analyse network data received by process and check them against known for the vulnerable code
- put a hardware breakpoint to the vulnerable code address and register self as debugger, and/or if vulnerable code is executed, the debugger can be invoked meaning the vulnerable code is performed on the computer.

E.g. operating system, programming language used for the component, such as a library, which has the vulnerability can affect the information which is to be collected.

In addition and/or instead of the above listed collected information, at least one of the following information can be collected from the computer:
- file name and/or path of a component or package where the vulnerability is being used, e.g. of the Windows .so, Linux .so, Java .jar, Python, Go, Rust, NodeJS package, or other library type file
- whether the component file, such as library file, is found within some kind of container, for example simple path and environment mapping such as Python Venv, NodeJs Nodeenv, chroot, or in a virtualized container such as Docker (that may indicate that the component, such as library, is used only within the application that is running in the container)
- component, such as library, file type specific scan of program executables or script files, where said component, such as library, is included
   ∘ e.g. scan import sections of Windows PE, Linux ELF, MacOs Mach-O, etc.
   ∘ e.g. scan import bytecode of Java, .Net and other bytecode files
   ∘ e.g. scan import statements in Python, NodeJS and other script languages
- application installation logs and uninstall files in Windows, Linux, Mac and other operating systems that keep information what files are installed by what installer, repository package
- EDR or other behaviour information on what processes have been executed
   o e.g. what modules they have imported
   ∘ e.g. what network connections the application has done
   ∘ e.g. which processes have done read access to the library file with vulnerability
- application knowledge repository where this information is collected and enriched with additional knowledge produces with RAG LLMs and other methods that can fetch additional knowledge from Internet and other resources.

In one example embodiment and for example in the above example scenario, after some period of running monitoring agent it can be determined how systematically vulnerable code is executed on the computer and this information can be used to determine how it affects actual severity for this machine. If vulnerable code is not actually executed on a given computer, monitoring agent can continue following the vulnerability with purpose to recognize attempts to exploit the discovered vulnerable code. Monitoring agent can for example keep tracking the received properties and alert if suddenly process started to activate the vulnerable code.

In one embodiment of the invention monitoring agent may persistently monitor sensitive processes, such as Web server, collect their execution history and match immediately if a new vulnerability report is received.

In the following an example according to one embodiment of the invention is presented, related especially to Java environment. In this example the computer is running a html-server, e.g. Tomcat Java html-server, and an internal GUI-software, e.g. DentalmplantPlanner. In the vulnerability search a vulnerable component is found which is used by the Java process, the vulnerable component can for example be a library, such as Log4j.jar-library. This would thus seem a vulnerability. But as the computer is running multiple Java-processes, the components having a vulnerability may be in another process and the current Java process is not running the vulnerable component. In this case, the vulnerable example component Log4j.jar is in the class path of DentalmplantPlanner Java process and not in the in the class path of Tomcat.

In the following another detailed example embodiment is presented. In this example the process can be as follows:
1. Detecting a vulnerability, e.g. one of Log4J or BatBadBut variants, in a library file used e.g. by third party application developers
2. Collecting information from the computer, e.g. where this file is and by what processes include or use it, for example by using the methods described above, wherein the process can relate for example to an application and/or executable.
3. Cross-verify and enrich the information against application knowledge repository, to identify cases where multiple steps are needed to identify the processes which use the vulnerable component, such as library.
   a. For example, a vulnerability could be in a file imported by ODBC driver, which is typically installed as a separate package.
   b. In such cases information may be needed from application knowledge repository that this is a component that is included by other programs.
   c. Then it can be scanned and searched which programs in the computer use said ODBC driver.
4. Once there is reliable information which processes should be checked, these processes can be checked to identify whether the library with vulnerability in in active use in the computer, e.g. by using EDR information, processing execution logs, listing of current running processes and/or listing of current network connections.
5. If no process which uses the vulnerability has been in use, the vulnerability finding can be ignored and/or marked e.g. as a (low) risk level.
6. If a process which uses the vulnerability is in active use, e.g. the application knowledge repository can be used to find out what kind of application or service the process is.
7. Application knowledge repository can be read or examined to determine what kind of access controls said applications typically have.
8. The knowledge about the process can be used to accurately simulate the use of vulnerability in exposure management.
   a. e.g. a networked service with history of listening to network traffic can be used in simulated network-based attack
   b. If the said network service is known to require used authentication before interaction, the simulated attack can be performed for example only after attacker has obtained suitable user credential on prior attack step
   c. e.g. an end user application can be used in a simulated phishing attack

In the solution of the invention data is collected related to a computer and/or a computer network, the collected data relating at least to behaviour of at least one application.

The applications can be monitored, e.g. at the computer, such as a host, and/or at the backend, by tracking events created by the monitored application, such as created or changed files, accesses to registry, changes done to registry, created processes, created child processes, injection of processes in other processes, and/or by analysing captured events to be malicious, e.g. by recognizing known patterns of file encryption, preventing malware detection by the application.

In the solution of the invention the applications can be monitored e.g. from MDR or EDR event telemetry event flow, for example either at the sensor of a computer or node or at the backend. In one embodiment of the invention information about normal, i.e. usual and frequent, behaviour and/or operation of the application is collected from multiple computers, such as hosts, of the computer network, such as a threat detection network.

Vulnerability information for an application can be queried and received from a server, a service, a backend system, an external source and/or vulnerability management service, e.g. based on an identifier of the application.

In one embodiment the solution of the invention can check in which computer a certain application is installed.

In order to determine running processes of a computer process execution telemetry can be read from an agent of the computer or network, e.g. EDR or MDR agent. This can be achieved by connecting to the system's API or database, e.g. MDR / EDR system's API or database. A query can be done for the telemetry data for process execution logs for a computer or network. The received data can be parsed to extract relevant information about the processes.

In one embodiment of the invention information about already remediated vulnerable entities, real incidents associated, their locations, manufacturers, remediation time and efforts, time of patch development and/or deployment by manufacturers (and so forth) can be utilized as factors that can be taken into account when forecasting new, not existing yet security findings and associated risks determining risk level of a computer, application, executable and/or process.

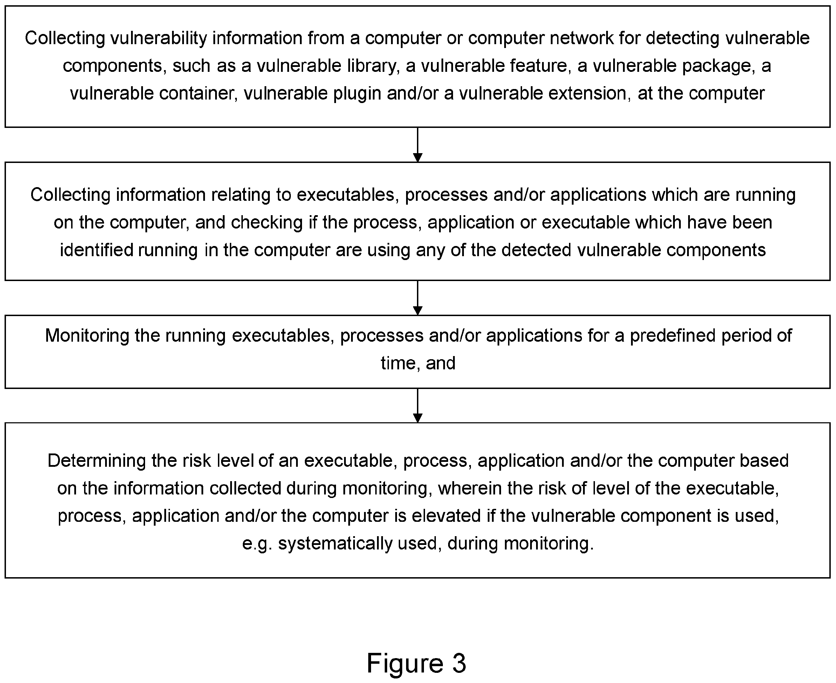

Figure 3 presents an example method according to one embodiment of the invention. The example method comprises collecting vulnerability information from a computer or computer network for detecting vulnerable components, such as a vulnerable library, a vulnerable feature, a vulnerable package, a vulnerable container, vulnerable plugin and/or a vulnerable extension, at the computer, collecting information relating to executables, processes and/or applications which are running on the computer, and checking if the process, application or executable which have been identified running in the computer are using any of the detected vulnerable components, monitoring the running executables, processes and/or applications for a predefined period of time, and determining a risk level of an executable, process, application and/or the computer based on the information collected during monitoring, wherein the risk of level of the executable, process, application and/or the computer is elevated if the vulnerable component is used, e.g. systematically used, during monitoring.

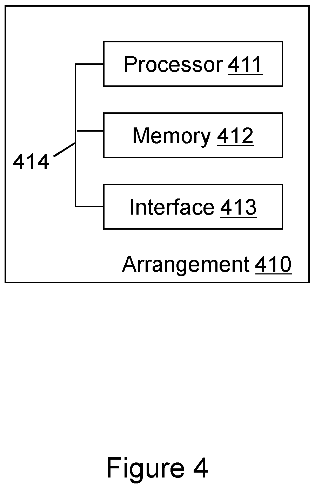

As presented in Figure 4, an arrangement 410 or at least part of the arrangement, e.g. a computer, an endpoint and/or a server, according to exemplifying embodiments of the present invention may comprise at least one computer which comprises a processor 411 and at least one memory 412 (and possibly also at least one interface 413), which may be operationally connected or coupled, for example by a bus 414 or the like, respectively. use to forecast new, not existing yet security findings and risks associated.

The processor 411 of the arrangement 410 is configured to read and execute computer program code stored in the memory 412. The processor may be represented by a CPU (Central Processing Unit), a MPU (Micro Processor Unit), etc., or a combination thereof. The memory 412 of the arrangement 410 is configured to store computer program code, such as respective programs, computer/processor-executable instructions, macros or applets, etc. or parts of them. Such computer program code, when executed by the processor 411, enables the arrangement 410 to operate in accordance with exemplifying embodiments of the present invention. The memory 412 may be represented by a RAM (Random Access Memory), a ROM (Read Only Memory), a hard disk, a secondary storage device, etc., or a combination of two or more of these. The interface 413 of the arrangement 410 is configured to interface with another arrangement and/or the user of the arrangement 410. That is, the interface 413 may represent a communication interface (including e.g. a modem, an antenna, a transmitter, a receiver, a transceiver, or the like) and/or a user interface (such as a display, touch screen, keyboard, mouse, signal light, loudspeaker, or the like).

The arrangement 410 may, for example, represent a computer 1 or may represent a (part of a) server 2 in Figure 1. The arrangement 410 may be configured to perform a procedure and/or exhibit a functionality as described in any one of Figures 1 to 3.

The data collected with the solution of the invention may be stored in a database or similar model for information storage for further use.

In an embodiment, further actions may be taken to secure the computer or the computer network if a malicious file, application or activity has been detected. Also actions by changing the settings of the computers or other network nodes can be done. Changing the settings may include, for example, one or more nodes (which may be computers or other devices) being prevented from being switched off in order to preserve information in RAM, a firewall may be switched on at one or more nodes to cut off the attacker immediately, network connectivity of one or more of the network nodes may be slowed down or blocked, suspicious files may be removed or placed into quarantine, logs may be collected from network nodes, sets of command may be executed on network nodes, users of the one or more nodes may be warned that a threat or anomaly has been detected and that their workstation is under investigation, and/or a system update or software patch may be sent from the security backend to the nodes. In one embodiment of the invention one or more of these actions may be initiated automatically.

Next some practical example steps of operation of a threat prevention and/or detection solution according to example embodiments of the invention will be described.

Deployment and distributing of the components of the threat detection or prevention system: In one embodiment of the invention, in which all agents may fundamentally have the same code base and/or ability to adapt to their role by activating different components in their modular architecture and replicate themselves, one would merely need to deploy one initial agent in a customer network with sufficient access rights, which would then discover servers and install copies of itself in the suitable locations and establish the internal communications network, e.g. an internal swarm communications network, as well as the backend update, reporting and communication channel. In addition, authentication and other required issues may need to be considered, and in first incarnations agents may be deployed on individual computers, such as hosts.

Normal operation: The agents continuously monitor their environment and collect data, learning from what they see and build models, e.g. threat detection models and/or models of normal behaviour of an application. These models may be shared across swarm nodes and used for learning, for example of users' behaviour on one computer vs. others in the network. Additionally, abstract information may be sent to the backend in a privacy preserving way. The agents utilize the abovementioned learning models to be prepared also for knowing what is normal.

Encountering a known threat: The agents detecting either a known threat or an anomaly indicating a known threat may instantly alert other nodes (such as computers or servers) of the situation, also to prepare for threats that may deactivate them, and call for additional resources if needed (spin up new virtual agents or have them delivered from another computer if there is risk of compromise). A known threat can be detected based on the behaviour of a computer, a user and/or an application when comparing the detected behaviour to the behaviour model. If the agent already has the means for response, that action may be taken.

Encountering a novel threat: The agents, due to constantly learning what is normal and in a very granular manner due to their specificity with the data of their own nodes combined with the broader view of possible global, organization or user group level models, are also well equipped to detect novel threats. Their ability to interact with the users may be used to verify the threat, and if the threat is verified, take actions to contain it as well as build a new threat model that can be circulated, to other nodes, computers and/or servers. In some embodiments, the risk of the threat may be determined to be so great that autonomous containment actions may also be taken before awaiting a final decision. The degree of autonomous actions can always be adjusted as needed. The connectivity model also allows for the help of human experts to be called upon if needed.

Backend preparation: Constantly during operation, generated behaviour models of the applications, users and/or information on events and/or threats can be abstracted and sent to the backend. This enables a backend "laboratory" to continue experimentation on more effective defence tools in a secure environment as well as provides further correlation and analysis of the data sent from the multitude of individual intelligent agents or sensors. Backend can also share threat detection models to the nodes.

As described above, the nature of the model used by the system (e.g. EDR or MDR) may be, or may incorporate elements, from one or more of the following: a neural network trained using a training data set, exact or heuristic rules (e.g. hardcoded logic), fuzzy logic based modelling, and statistical inference-based modelling. The model may be defined to take into account e.g. particular usage patterns of an application, a program, node, files, processes, connections, and dependencies between processes.

Although the invention has been described in terms of preferred embodiments as set forth above, it should be understood that these embodiments are illustrative only and that the claims are not limited to those embodiments. Those skilled in the art will be able to make modifications and alternatives in view of the disclosure which are contemplated as falling within the scope of the appended claims. Each feature disclosed or illustrated in the present specification may be incorporated in the invention, whether alone or in any appropriate combination with any other feature disclosed or illustrated herein. Lists and groups of examples provided in the description given above are not exhaustive unless otherwise explicitly stated.

## Claims

1. A method, e.g. a computer implemented method, of threat detection and/or prevention in a computer or computer network, wherein the method comprises:
collecting vulnerability information from a computer (101) or computer network (201) for detecting vulnerable components, such as a vulnerable library, a vulnerable feature, a vulnerable package, a vulnerable container, vulnerable plugin and/or a vulnerable extension, at the computer (101),
collecting information relating to executables, processes and/or applications which are running on the computer (101), and checking if the process, application or executable which have been identified running in the computer (101) are using any of the detected vulnerable components,
monitoring the running executables, processes and/or applications for a predefined period of time, and
determining a risk level of an executable, process, application and/or the computer (101) based on the information collected during monitoring, wherein the risk of level of the executable, process, application and/or the computer (101) is elevated if the vulnerable component is used, e.g. systematically used, during monitoring.

2. A method according to claim 1, wherein the risk level of the executable, process, application and/or the computer (101) is elevated if the determined vulnerable component is known to be exploitable, e.g. a PoC of the exploit is known to exist, or the determined vulnerable component is known to be exploited, and/or a patch for the vulnerability of the vulnerable component is not installed.

3. A method according to claim 1 and 2, wherein the risk of level of the executable, process, application, and/or the computer (101) is elevated if the determined vulnerable component is used a predefined number of times during a predefined period of time.

4. A method according to any previous claim, wherein at least one of the following information is collected for detecting a vulnerable component and/or relating to the detected vulnerable component: a process, executable, application and/or version running the vulnerable code, e.g. CPE entry; a specific module, such as a library, a package, a plugin, an extension containing the vulnerable code; an API and possible parameters which could be used and executed if vulnerable code is running; files, applications, modules and/or processes opened or executed if vulnerable code is running; network protocols required to exploit vulnerability; actual execution area of vulnerable code within process e.g. relative offset of code section where vulnerable code resides.

5. A method according to any previous claim, wherein at least one of the following information is collected relating to the executables, processes and/or applications at the computer (101) relating to a vulnerable component: is a vulnerable executable, process and/or application running on the computer (101); is a vulnerable component and/or module loaded by a executable, process and/or application; usage of vulnerable module and/or code by an API; usage of vulnerable module and/or code by a running environment of the process, application and/or executable; files, modules and processes using vulnerable module and/or code.

6. A method according to any previous claim, wherein the method further comprises analysing the executable, process and/or application in relation to the detected vulnerability by determining whether a vulnerable component used with the said executable, the said process and/or the said application is usable for attacking the computer (101).

7. A method according to any previous claim, wherein the method comprises using binary tracing and/or API call monitoring for determining which components, e.g. vulnerable components, are in use.

8. A method according to any previous claim, wherein the method further comprises analysing a running environment of the process, application or executable for determining whether the vulnerable component is used by the running environment of the process, application and/or executable, and/or checking environment variables relating to a process, application and/or executable for determining whether a vulnerable component, such as a vulnerable library, is in use by the process, application or executable.

9. A method according to any previous claim, wherein the applications comprise interpreted applications and/or just-in-time compiled applications, such as Java-applications, Python-applications, Perl-applications, Ruby-applications, non-executable applications, and/or the vulnerability is in the non-executable package.

10. A method according to any previous claim, wherein the method further comprises monitoring the network traffic to the computer (101), e.g. by filtering and/or analysing network data received by an executable, process and/or application.

11. A method according to any previous claim, wherein the method further comprises checking the monitored the network traffic for verifying active configuration of the executable, the process and/or the application, and/or checking the filtered and analysed network data against known vulnerable code for detecting vulnerable components.

12. A method according to any previous claim, wherein the information related to vulnerabilities and/or vulnerable components is collected at least in part from at least one data collector at the computer (101) and/or computer network (201), and/or received from a backend system (102, 202) of a threat detection network and/or an external data source, such as threat intelligence data source, and/or
the computer (101) sends at least a part of the collected data to a backend system (102, 202), e.g. an XDR-backend system, for analysis and/or receives information related to the analysis from the backend (102, 202).

13. A method according to any previous claim, wherein the method further comprises generating an attack path map of the computer network (201) based at least in part on the determined risk level of a computer (101), determined risk level of an executable of the computer (101), determined risk level of a process of the computer (101) and/or determined risk level of an application of the computer (101).

14. An arrangement (410), such as a computer (101) and/or a backend server (102, 202), wherein the arrangement is configured:
to collect vulnerability information from a computer (101) or computer network (201) for detecting vulnerable components, such as a vulnerable library, a vulnerable feature, a vulnerable package, a vulnerable plugin and/or a vulnerable extension, at the computer (101),
to collect information relating to executables, processes and/or applications which are running on the computer (101), and to check if the process, application or executable which have been identified running in the computer (101) are using any of the detected vulnerable components,
to monitor the running executables, processes and/or applications for a predefined period of time, and
to determine the risk level of an executable, process, application and/or the computer (101) based on the information collected during monitoring, wherein the risk of level of the executable, process, application and/or the computer (101) is elevated if the vulnerable component is used, e.g. systematically used, during monitoring.

15. An arrangement according to claim 14, wherein the arrangement (410) is configured to carry out a method according to any claim 2 - 13

16. A computer program comprising instructions which, when executed by a computer, cause the computer to carry out the method according to any of claims 1 - 13.

17. A computer-readable medium comprising the computer program according to claim 16.
